# FASCICULE DE BREVET EUROPEEN

(11) **EP 0 770 429 B1**
(45) Date de publication et mention de la délivrance du brevet: **30.03.2005**
(21) Numéro de dépôt: 96402101.8
(22) Date de dépôt: 02.10.1996
(51) Int. Cl.: B05D 7/14, C09D 5/08

(54) **Surfaces métalliques revêtues de polymères**
Mit Polymeren beschichtete Metalloberflächen
Polymer-coated metal surfaces

(30) Priorité: 26.10.1995 FR 9512637
(43) Date de publication de la demande: 02.05.1997
(73) Titulaire: ARKEMA, 92800 Puteaux (FR)
(72) Inventeur: Jacquemet, Régis, 27000 Evreux (FR); Perret, Patrice, 27470 Serquigny (FR)
(74) Mandataire: Neel, Henry

(56) Documents cités:
- EP-A- 0 495 560
- DE-A- 3 422 920

## Description

La présente invention concerne des surfaces métalliques revêtues de polymères et plus particulièrement des tubes dont la surface extérieure est revêtue d'un polymère thermoplastique. La demanderesse a découvert des revêtements de polymères thermoplastiques présentant une force de pelage à 130° C supérieure à 400 N/5 cm.

Un moyen d'obtenir cette force de pelage est par exemple de disposer entre le métal et le thermoplastique une couche de résine epoxy ayant une température de transition vitreuse supérieure à 120° C et une couche de liant à base de polypropylène, la couche de résine epoxy étant contre le métal.

DE 3 4222 920 décrit des revêtements de tuyaux en acier comprenant successivement une couche de résine epoxy, une couche de polypropylène greffé et finalement une couche extérieure d'un mélange de polypropylène et d'un copolymère bloc polypropylène/polyéthylène. La température de transition vitreuse (T_{g}) de la résine epoxy est comprise entre 80 et 94° C. Ces revêtements conviennent pour l'eau chaude à 90° C.

Re 30 006 décrit des revêtements de tuyaux en acier comprenant successivement une résine epoxy et un polyéthylène modifié par greffage ou copolymérisation avec l'anhydride maléique. Il n'est rien écrit sur la T_{g} de la résine epoxy, cependant, le polyéthylène ne permet pas de travailler au-dessus de 80° C. Ainsi, l'art antérieur n'a pas décrit de revêtement ayant une force de pelage élevée à 130° C comme celle de l'invention.

La présente invention est donc une surface métallique revêtue d'un polymère thermoplastique, le revêtement présentant une force de pelage à 130°C (mesurée selon la norme DIN 30 670), supérieure à 400 N/5 cm.

La surface métallique peut être quelconque, cependant, l'invention est particulièrement utile pour la surface extérieure de tuyaux, ces tuyaux pouvant avoir un diamètre extérieur par exemple jusqu'à 0,8 ou 1,5 m et une épaisseur de 2 à 25 mm.

Le polymère thermoplastique peut être quelconque pourvu que sa température de service soit supérieure ou égale à 130° C et de préférence comprise entre 130 et 150° C.

A titre d'exemple, on peut citer le polypropylène, les polyamides, les alliages de polyamide, ces polymères pouvant être chargés de fibres de verre. On entend par polypropylène les homopolymères du propylène et les copolymères du propylène avec au moins une alpha oléfine et majoritaires en poids en propylène. Cette alpha oléfine est par exemple de l'éthylène.

On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de certains monomères ce qui conduit à des copolyamides.

On peut utiliser des mélanges de polyamide. On utilise avantageusement le PA-6 et le PA-6,6.

On entend par alliage de polyamide au sens de l'invention les mélanges de polyamide se présentant sous forme de matrice polyamide dans laquelle sont dispersés des nodules d'un polymère (A) ou d'un caoutchouc, l'alliage devant présenter une température de service comme indiqué précédemment.

A titre d'exemple de polymère (A), on peut citer le polypropylène précédent, les polyéthylènes réticulés ou les mélanges réticulés de (i) copolymères de l'éthylène comprenant de l'anhydride maléique et de (ii) copolymères de l'éthylène comprenant du méthacrylate de glycidyle.

A titre d'exemple de caoutchoucs, on peut citer le styrène-butadiène (SBR), le nitrile-butadiène (NBR), le caoutchouc naturel, le polyisoprène, le polybutadiène, le caoutchouc butyle, les copolymères séquencés styrène-butadiène-styrène (SBS), les copolymères styrène-isoprène-styrène (SIS), les copolymères styrène-éthylène/butène-styrène (SEBS).

Le polymère (A) et le caoutchouc peuvent éventuellement porter des fonctions pour faciliter la compatibilisation avec le polyamide. Ces fonctions peuvent être obtenues par greffage d'au moins un acide carboxylique insaturé, un anhydride ainsi que les dérivés de ces acides et anhydrides. A titre d'exemple d'acides carboxyliques, on peut citer l'acide acrylique, l'acide méthacrylique, l'acide maléique, l'acide fumarique, l'acide itaconique, l'acide crotonique, l'anhydride itaconique, l'anhydride nadique, l'anhydride maléique et les anhydrides maléiques substitués tel que par exemple l'anhydride diméthyl maléique.

A titre d'exemples de dérivés, on peut citer les sels, les amides, les imides et les esters tels que le mono et dimaléate de sodium, l'acrylamide, le maleimide et le fumarate de diméthyle. Les procédés de greffage sont connus de l'homme de l'art.

On peut aussi faciliter la formation de la matrice polyamide en ajoutant un agent compatibilisant au mélange de polyamide et de polymère (A) ou de caoutchouc. Ce produit est connu en lui-même. A titre d'exemple, on peut citer le polypropylène greffé par un acide carboxylique insaturé, un anhydride d'acide carboxylique ou leurs dérivés. Ces produits peuvent être choisis parmi les produits de greffage décrits ci-dessus.

Le compatibilisant peut être aussi un mélange de polypropylène greffé et d'un élastomère tel qu'un caoutchouc EPR ou EPDM.

S'agissant du polypropylène, le compatibilisant est avantageusement un copolymère éthylène/propylène majoritaire en propylène et greffé par un produit présentant un site réactif avec les amines puis condensé avec des polyamides ou des oligomères de polyamides ayant une seule extrémité amine. Ces comptabilisants et les alliages de polyamide correspondants sont décrits dans le brevet US 5 342 886 dont le contenu est incorporé dans la présente demande.

La quantité de polyamide formant la matrice de ces alliages de polyamide peut être comprise entre 55 et 95 % en poids de l'ensemble du polyamide et du polymère (A) ou du caoutchouc. On peut fabriquer ces alliages de polyamide par les techniques habituelles de mélange à l'état fondu (bi-vis, BUSS ou monovis).

La force de pelage à 130° C est d'au moins 400 N/5 cm, elle peut atteindre 650 N si le thermoplastique est chargé de fibres de verre. A 150° C, la force de pelage est supérieure à 180 N/5 cm, elle peut atteindre 200 N/5 cm pour des polyamides ou des alliages de polyamide et 350 N/5 cm pour des thermoplastiques chargés de fibres de verre.

La demanderesse a découvert qu'un moyen d'obtenir ces forces de pelage est par exemple de disposer entre le métal et le thermoplastique une couche de résine epoxy ayant une température de transition vitreuse supérieure à 120° C et une couche de liant à base de polypropylène fonctionnalisé, la couche de.résine epoxy étant contre le métal.

La présente invention concerne aussi cette surface métallique ainsi revêtue.

Le principe des résines epoxy est décrit par exemple dans KIRK-OTHMER Encyclopedia of Chemical Technology Vol. 9 - pages 267-289 3ème édition. Il suffit de choisir une résine ayant la T_{g} requise. Ces résines sont le plus souvent des polyglycidyléther d'un polyphénol.

On utilise avantageusement :
- les produits de condensation du bisphénol A et de l'épichlorhydrine ;
- les résines epoxy-crésol novolac (ECN) ;
- les epoxy phénol novolac ;
- les résines dérivées du bisphénol F ;
- les dérivés des phénols polynucléaires et des glycidyl éther ;
- les résines cycloaliphatiques
- les résines dérivées d'amines aromatiques telles que :
   - les dérivés du tétraglycidylméthylènedianiline
   - les dérivés du triglycidyl-p-aminophénol
   - les dérivés des triazines tels que le triglycidyl isocyanurate
- les résines dérivées de l'hydantoine.

Les résines utilisées dans la présente invention sont réticulables entre 180 et 250° C. On peut réticuler par exemple avec des amines telles que la diméthyléthanolamine et la méthylène dianiline ou des amides tels que la dicyandiamide ou encore des résines phénoliques.

Ces résines peuvent comprendre des additifs tels que des silicones, des pigments tels que dioxyde de titane, oxydes de fer, du noir de carbone, des charges telles que du carbonate de calcium, du talc ou du mica.

Le temps de gel est avantageusement compris entre 20 et 30 secondes.

Le temps de gel est défini par la norme AFNOR NFA 49-706. C'est le temps nécessaire pour provoquer un accroissement rapide de la viscosité à une température déterminée.

Avantageusement, la T_{g} est supérieure à 150° C. Ces résines peuvent se présenter sous forme de poudre ou liquide qu'on projette sur la surface métallique préalablement dégraissée, sablée et chauffée.

Le liant à base de polypropylène désigne par exemple des compositions comprenant essentiellement du polypropylène fonctionnalisé par greffage d'au moins un acide carboxylique insaturé, un anhydride d'acide carboxylique insaturé ou des dérivés de ces acides et anhydrides. Ces produits ont déjà été cités plus haut. Avantageusement, on greffe du polypropylène de Melt index (Ml) 0,1 à 10 g/10 mm à (230° C sous 2,16 kg) par de l'anhydride maléique en présence d'initiateurs tels que des peroxydes. La quantité d'anhydride maléique effectivement greffée peut être comprise entre 0,01 et 10 % en poids du polypropylène greffé. Le polypropylène greffé peut être dilué par du polypropylène, des caoutchoucs EPR, EPDM ou des copolymères du propylène et d'une alpha oléfine. On peut aussi, selon une autre variante, effectuer un cogreffage d'un mélange de polypropylène et d'EPR ou d'EPDM, c'est-à-dire ajouter un acide carboxylique insaturé, un anhydride ou leurs dérivés dans un mélange de polypropylène et d'EPR ou d'EPDM en présence d'un initiateur.

L'épaisseur de la couche de résine epoxy peut être comprise entre 20 et 400 µm et de préférence entre 50 et 150 µm.

L'épaisseur de la couche de liant peut être comprise entre 100 et 500 µm et de préférence entre 200 et 350 µm.

L'épaisseur de la couche de polymère thermoplastique peut être comprise entre 0,5 et 5 mm et de préférence 1,5 et 3 mm.

On ne sortirait pas du cadre de l'invention en ajoutant à la résine epoxy, au liant et au polymère thermoplastique des charges, des anti-U.V, des pigments, des stabilisants, des ignifugeants, etc....

Un procédé de fabrication de ces surfaces revêtues est décrit ci-après. La surface métallique est d'abord dégraissée, sablée puis chauffée. La résine epoxy est déposée sous forme liquide ou par projection ou projection électrostatique si c'est une poudre sur la surface métallique chauffée à 200 ≃ 240° C. Après environ 20 secondes, c'est-à-dire, peu avant la fin du temps de gel avant que la résine ne soit réticulée pour qu'il reste des fonctions epoxydes pour réagir avec les greffons du liant , on dépose le liant soit par projection si celui-ci est en poudre, soit par couchage ou laminage. Ensuite, on dépose de la même façon le polymère thermoplastique.

S'agissant de la surface extérieure de tubes métalliques, on procède de la même façon pour la résine epoxy puis le liant est soit déposé par projection si il est disponible en poudre soit le plus souvent extrudé dans une filière annulaire disposée concentriquement autour du tube. Le liant peut aussi être extrudé dans une filière plate produisant un ruban continu qu'on enroule autour du tube par exemple grâce à la rotation du tube sur lui-même. Le thermoplastique est déposé de la même façon.

La présente invention concerne une surface métallique revêtue comprenant successivement une couche de résine epoxy disposée contre le métal et ayant.une température de transition vitreuse supérieure à 120° C, une couche de liant à base de polypropylène modifié par greffage et une couche de polymère thermoplastique.

Le polymère thermoplastique dont la température de service est supérieure ou égale à 130°C est un alliage de polyamide se présentant sous forme de matrice polyamide et de nodules d'un polymère (A) ou d'un caoutchouc dispersés dans ladite matrice.

### Exemples

Dans les exemples suivants, on utilise les produits ci-dessous :
EUROKOTE 714-31 PP désigne une résine epoxy ayant une T_{g} = 105° C et fournie par la Société BITUMES SPECIAUX et de caractéristiques :
   Masse volumique à 23 ° C (NFT 30-043) : 1,5 +/- 0,05 g/ml
   Teneur en humidité (IBS 319) ≤ 0,50 %
   Granulométrie (IBS 316) : diamètre médian 38 +/- 4 µm refus à 96 µm < 10 %
   T_{g} (NFA 49-706) : 105° +/- 5° C
   Temps de gel 80 +/- 10 s à 180° C.
EPOXY P405/06 désigne une résine epoxy ayant une T_{g} = 160° C et fournie par la Société BITUMES SPECIAUX. Elle a un temps de gel de 25 +/- 5 s à 210° C.

EPOXY 500 618 désigne une résine epoxy ayant une T_{g} = 150° C fournie par AKZO et un temps de gel de 25 +/- 5 s à 210° C.

Les OREVAC 1, 2 et 3 désignent des polypropylènes greffés par l'anhydride maléique (MAH) contenant environ 0,5 % en poids de MAH et ayant les caractéristiques suivantes :

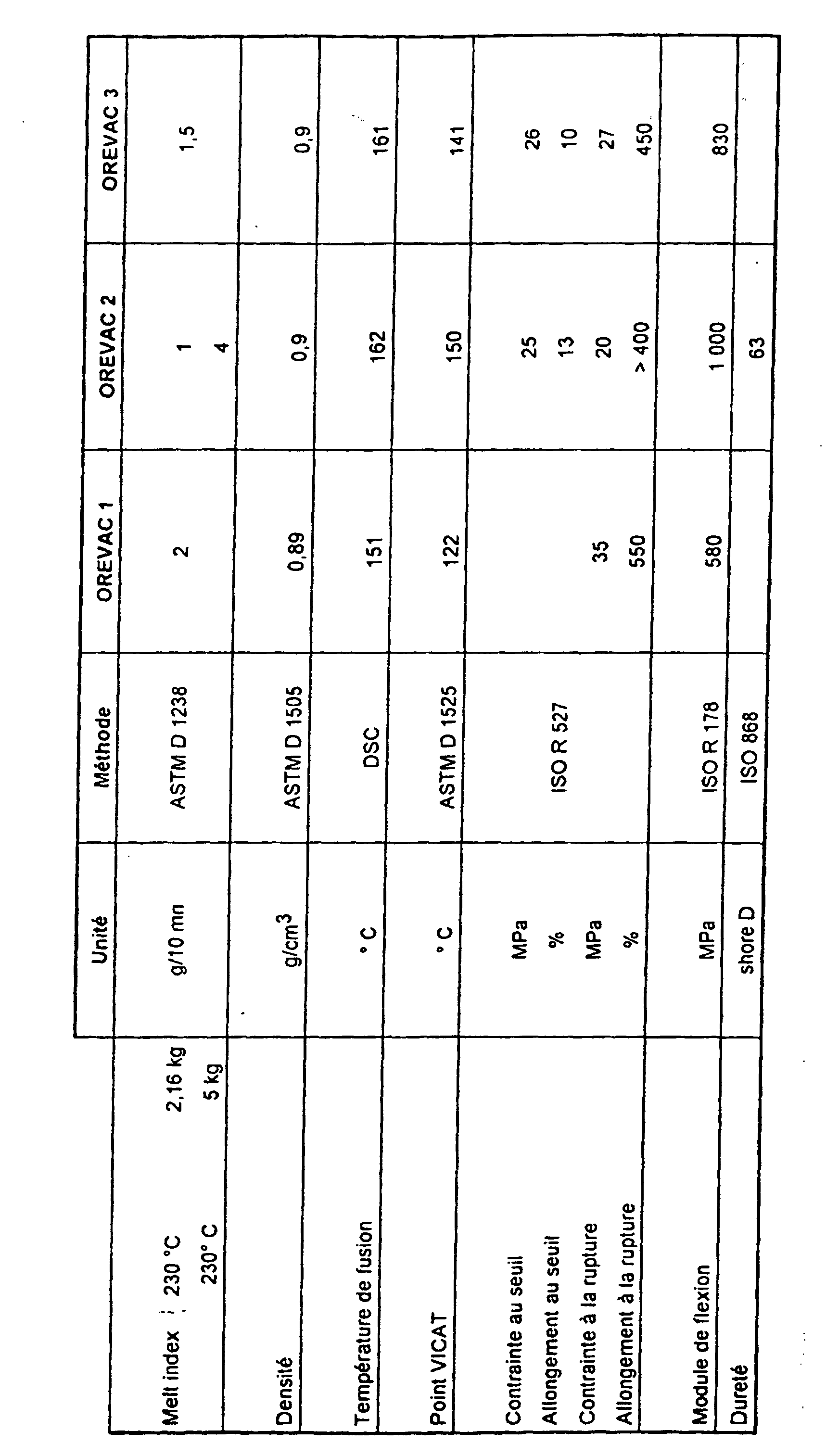

ORGALLOY 1 désigne un mélange de :
- 60 % de PA-6 de Melt index 2-3 (235° C)
- 30 % de polypropylène de Melt index 1,5-2 (235° C)
- 10 % d'un copolymère tronc éthylène/propylène à 12 % d'éthylène, greffé par l'anhydride maléique (1 % d'anhydride par rapport au tronc) puis condensé avec un oligomère monoaminé de caprolactame de degré de polymérisation 22, la quantité de ces oligomères étant de 25 % par rapport au tronc.

PP désigne un polypropylène de Ml 1 (230° C 2,16 kg) et Ml 4 (230° C 5 kg et dureté 63 shore D (ISO 868).

### Exemple 1

On réalise le revêtement 3 couches suivant :

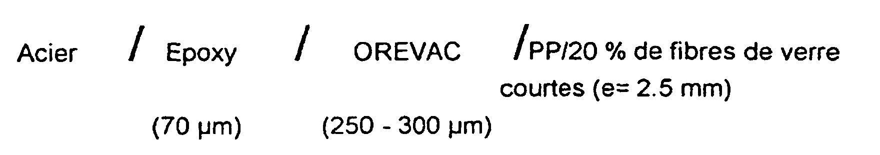

### Conditions d'application

θ tube = 200 - 220° C
Temps (Epoxy / Adhésif) = 22 - 25 s (c'est le temps entre l'application de la résine epoxy et l'application de l'OREVAC)
Temps (Epoxy / Refroidissement) = 3'

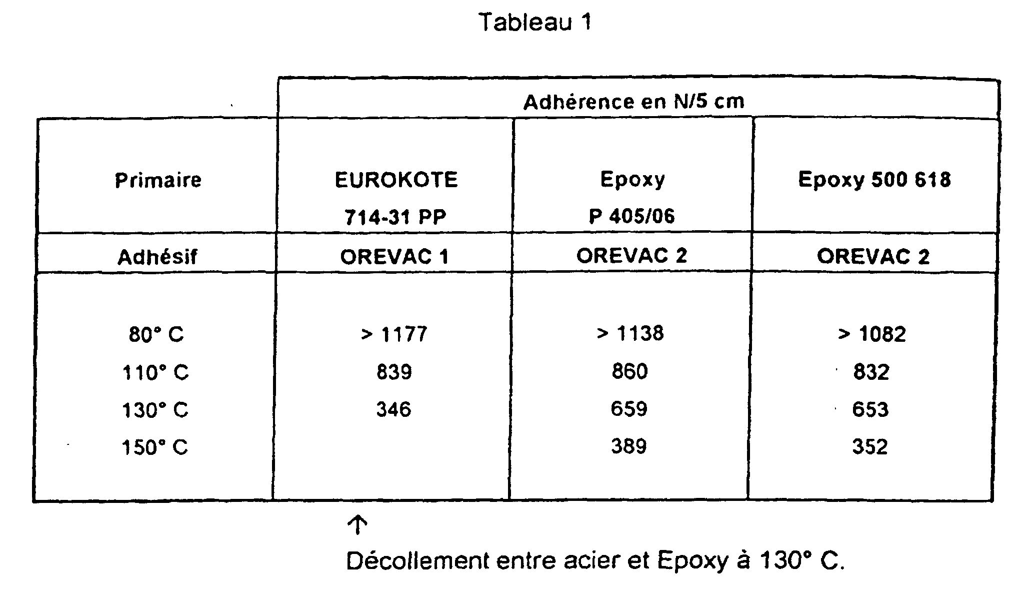

### Exemple 2

On réalise le revêtement 3 couches suivant : 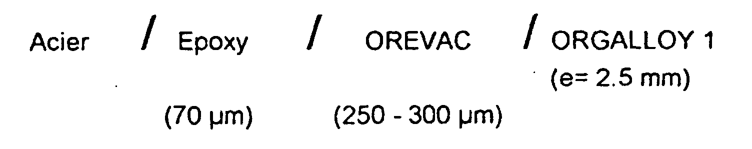
θ tube = 200 - 220° C
Temps (Epoxy / Adhésif) = 22 - 25 s c'est le temps entre l'application de la résine epoxy et l'application de l'OREVAC.
Temps (Epoxy / Refroidissement) = 3'

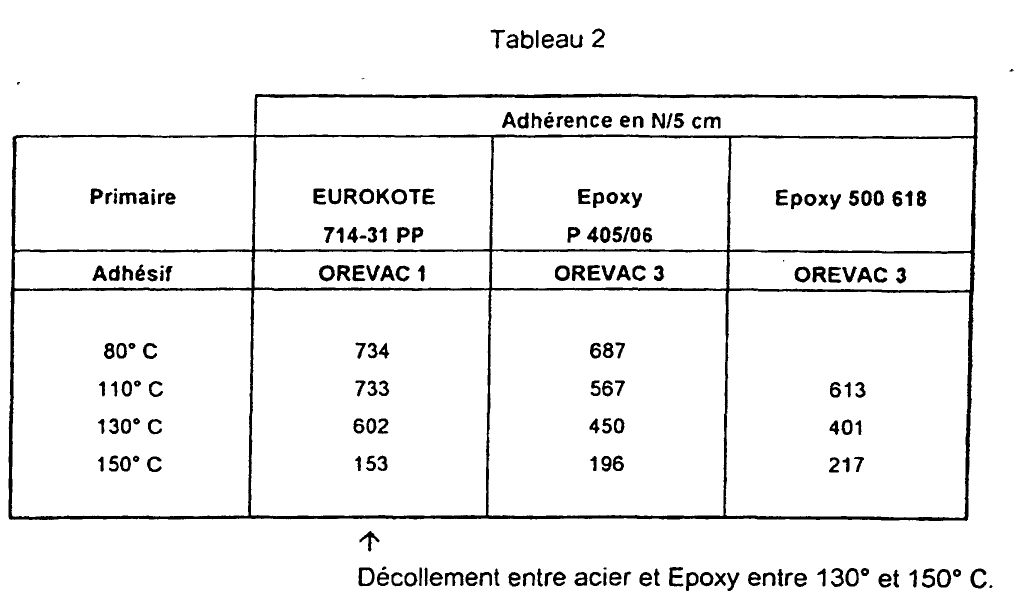

### Exemple 3

On réalise le revêtement 3 couches suivant : 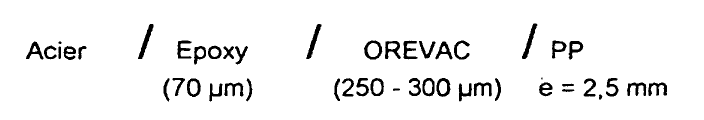
θ tube = 200 - 220° C
Temps (Epoxy / Adhésif) = 22 - 25 s
Temps (Epoxy / Refroidissement) = 3'

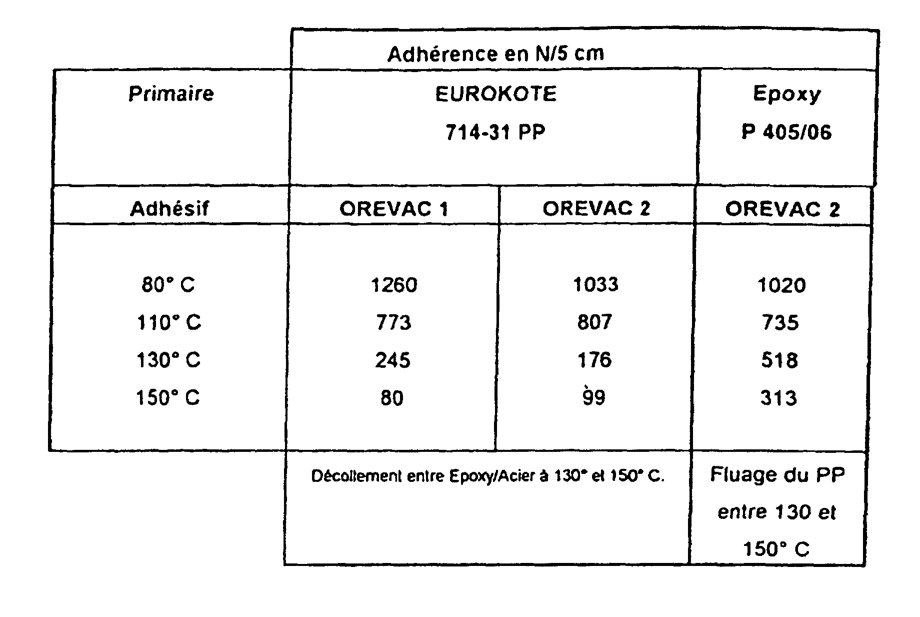

## Revendications

1. Surface métallique revêtue comprenant successivement une couche de résine époxy disposée contre le métal et ayant une température de transition vitreuse supérieure à 120°C, une couche de liant à base de polypropylène modifié par greffage et une couche de polymère thermoplastique, ledit polymère thermoplastique dont la température de service est supérieure ou égale à 130°C étant un alliage de polyamide se présentant sous forme de matrice polyamide et de nodules d'un polymère (A) ou d'un caoutchouc dispersés dans ladite matrice.

2. Produit selon la revendication 1, **caractérisé en ce que** le polyamide est un produit de condensation :
- d'un ou plusieurs aminoacides, tels que les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la metaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de certains monomères ce qui conduit à des copolyamides.

3. Produit selon la revendication 1 ou 2, **caractérisé en ce que** le polymère (A) est pris dans le groupe comprenant le polypropylène, les polyéthylènes réticulés ou les mélanges réticulés de (i) copolymères de l'éthylène comprenant de l'anhydride maléique et de (ii) copolymères de l'éthylène comprenant du méthacrylate de glycidyle.

4. Produit selon les revendications 1 à 3, **caractérisé en ce que** le caoutchouc est pris dans le groupe comprenant le styrène-butadiène (SBS), le nitrite-butadiène (NBR), le caoutchouc naturel, le polyisoprène, le polybutadiène le caoutchouc butyle, les copolymères séquencés styrène-butadiène-styrène (SBS), les copolymères styrène-isoprène-styrène (SIS), les copolymères styrène-éthylène/butène-styrène (SEBS).

5. Produit selon l'une des revendications 1 à 4 dans lequel le liant est une composition comprenant essentiellement du polypropylène fonctionnalisé par greffage d'au moins un acide carboxylique insaturé, un anhydride d'acide carboxylique insaturé ou leurs dérivés.

6. Tuyau comprenant une surface revêtue selon l'une des revendications 1 à 5, **caractérisé en ce que** la surface métallique revêtue est la surface extérieure du tuyau.

## Patentansprüche

1. Beschichtete Metalloberfläche, die nacheinander eine Epoxidharzschicht, die gegen das Metall angeordnet ist und eine Glasübergangstemperatur von mehr als 120 °C aufweist, eine Bindeschicht auf der Basis von Polypropylen, das durch Aufpolymerisation modifiziert ist, und eine thermoplastische Polymerschicht umfasst, wobei das thermoplastische Polymer, dessen Arbeitstemperatur über oder gleich 130 °C ist, eine Polyamidlegierung in Form einer Polyamidmatrize und Polyamidknötchen (A) oder eines in der Matrize dispergierten Kautschuks ist.

2. Produkt nach Anspruch 1, **dadurch gekennzeichnet, dass** das Polyamid ein Kondensationsprodukt:
- aus einer oder mehreren Aminosäuren wie z.B. den Aminohexansäuren, 7-Aminoheptansäure, 11-Aminoundekansäure und 12-Aminododekansäure eines oder mehrerer Lactame wie z.B. Caprolactam, Oenantholactam und Lauryllactam;
- aus einem oder mehreren Salzen oder Gemischen aus Diaminen wie z.B. Hexamethylendiamin, Dodecamethylendiamin, Metaxylylendiamin, Bisp Aminocyclohexylmethan und Trimethylhexamethylendiamin mit Diaciden wie z.B. Isophthal-, Terephthal-, Adipin-, Azelain-, Suberin-, Sebacin- und Dodecandicarboxylsäure
oder aus den Gemischen bestimmter Monomere ist, was zu Copolyamiden führt.

3. Produkt nach Anspruch 1 oder 2, **dadurch gekennzeichnet, dass** das Polymer (A) ausgewählt ist aus der Gruppe, bestehend aus Polypropylen, vernetzten Polyethylenen oder vernetzten Gemischen aus (i) Ethylencopolymenren, die Maleinsäureanhydrid enthalten, und (ii) Ethylencopolymeren, die Glycidylmethacrylat enthalten.

4. Produkt nach den Ansprüchen 1 bis 3, **dadurch gekennzeichnet, dass** der Kautschuk ausgewählt ist aus der Gruppe, bestehend aus Styrolbutadien (SBR), Nitrilbutadien (NBR), Naturkautschuk, Polyisopren, Polybutadien, Butylkautschuk, den sequenzierten Copolymeren Styrol-Butadien-Styrol (SBS), den Copolymeren Styrol-Isopren-Styrol (SIS), den Copolymeren Styrol-Ethylen/Buten-Styrol (SEBS).

5. Produkt nach einem der Ansprüche 1 bis 4, in dem das Bindemittel eine Zusammensetzung ist, die im Wesentlichen Polypropylen umfasst, das durch Aufpolymerisation von mindestens einer ungesättigten Carboxylsäure, einem Anhydrid einer ungesättigten Carboxylsäure oder deren Derivaten funktionalisiert ist.

6. Rohr, das eine Oberfläche aufweist, die nach einem der Ansprüche 1 bis 5 beschichtet ist, **dadurch gekennzeichnet, dass** die beschichtete Metalloberfläche die Außenfläche des Rohrs ist.

## Claims

1. Coated metallic surface comprising in succession a layer of epoxy resin disposed against the metal and having a glass transition temperature of more than 120°C, a layer of binder based on polypropylene modified by grafting, and a layer of thermoplastic polymer, the said thermoplastic polymer, whose service temperature is greater than or equal to 130°C, being a polyamide alloy in the form of a polyamide matrix with nodules of a polymer (A) or of a rubber dispersed in the said matrix.

2. Product according to Claim 1, **characterized in that** the polyamide is a condensation product:
- of one or more amino acids, such as amino caproic acid, 7-aminoheptanoic acid, 11-aminoundecanoic acid and 12-aminododecanoic acid, of one or more lactams such as caprolactam, oenantholactam and lauryllactam;
- of one of more salts or mixtures of diamines such as hexamethylenediamine, dodecamethylenediamine, meta-xylylenediamine, bis-p-aminocyclohexylmethane and trimethylhexamethylenediamine with diacids such as isophthalic acid, terephthalic acid, adipic acid, azelaic acid, suberic acid, sebacic acid and dodecanedicarboxylic acid; or of mixtures of certain monomers, leading to copolyamides.

3. Product according to Claim 1 or 2, **characterized in that** the polymer (A) is selected from the group consisting of polypropylene, crosslinked polyethylenes or crosslinked mixtures of (i) copolymers of ethylene containing maleic anhydride and (ii) copolymers of ethylene containing glycidyl methacrylate.

4. Product according to Claims 1 to 3, **characterized in that** the rubber is selected from the group consisting of styrene-butadiene (SBR), nitrile-butadiene (NBR), natural rubber, polyisoprene, polybutadiene, butyl rubber, styrene-butadiene-styrene (SBS) block copolymers, styrene-isoprene-styrene (SIS) copolymers and styrene-ethylene/butene-styrene (SEBS) copolymers.

5. Product according to one of Claims 1 to 4 wherein the binder is a composition comprising essentially polypropylene functionalized by grafting with at least one unsaturated carboxylic acid, unsaturated carboxylic anhydride or derivatives thereof.

6. Pipe comprising a coated surface according to one of Claims 1 to 5, **characterized in that** the coated metal surface is the outer surface of the pipe.
